# EUROPÄISCHE PATENTANMELDUNG

(11) **EP 4 011 538 A1**
(43) Veröffentlichungstag der Anmeldung: **15.06.2022**
(21) Anmeldenummer: 21204366.5
(22) Anmeldetag: 25.10.2021
(51) Int. Cl.: B23H 3/04, B23H 5/14, B23H 1/10

(54) **WERKZEUGKATHODE SOWIE VERFAHREN ZUM HERSTELLEN EINER WERKZEUGKATHODE ZUM ELEKTROCHEMISCHEN BEARBEITEN**

(30) Priorität: 16.11.2020 DE 102020214344
(71) Anmelder: MTU Aero Engines AG, 80995 München (DE)
(72) Erfinder: Bayer, Kilian, 80995 München (DE); Huttner, Roland, 80995 München (DE)

(57) **Zusammenfassung**

Die Erfindung betrifft eine Werkzeugkathode (10, 20) sowie eine Verfahren zum elektrochemischen Bearbeiten eines Bauteils (14, 24), welche wenigstens eine Arbeitsfläche (11, 21) aufweist, die unter Ausbildung eines von einem Elektrolyt durchströmbaren Arbeitsspalts (16, 26) im Wesentlichen komplementär zu der herzustellenden Oberfläche (28) des Bauteils (14, 24) geformt ist. Die Arbeitsfläche (21) der Werkzeugkathode (10, 20) weist wenigstens eine Strömungsführungseinrichtung (23) auf.

## Beschreibung

Die Erfindung betrifft eine Werkzeugkathode sowie ein Verfahren zum Herstellen einer Werkzeugkathode zum elektrochemischen Bearbeiten mit wenigstens einer Arbeitsfläche, die unter Ausbildung eines von einem Elektrolyt durchströmbaren Arbeitsspalts im Wesentlichen komplementär zu der herzustellenden Oberfläche des Bauteils geformt ist.

Beim elektrochemischen Bearbeiten (Elysieren) eines Bauteils, wie dem Elektrochemischen Abtragen (ECM: "Electrochemical Machining") oder Puls-ECM bzw. Präzisen Elektrochemischen Abtragen (PECM: "Precise Electrochemical Machining") oder ähnliche Verfahrensvarianten wird ein elektrisch leitfähiges Metall durch einen elektrochemischen Prozess entfernt. Dabei wird eine Werkzeugkathode gegenüber dem zu bearbeitenden Bauteil (Anode) bewegt und dabei "in" bzw. "durch" das Bauteil geführt. Gleichzeitig strömt ein Elektrolyt in den Arbeitsspalt zwischen der Werkzeugkathode und dem Bauteil, welcher auch zum Abtransport der entstehenden Prozessprodukte dient. Die Vorschubgeschwindigkeit beträgt abhängig von der eingesetzten Verfahrensart zwischen 0,05 mm/ min und 10 mm/ min. Am Bauteil wird dabei die gewünschte, durch die Kathode vorgegebene Form ausgebildet.

Beim elektrochemischem Abtragen an insbesondere flächig ausgebildeten Bauteilen können immer, jedoch besonders vermehrt zu Beginn der Bearbeitung, Kurzschlüsse auftreten. Bei fortschreitender Bearbeitung reduziert sich die Gefahr von Kurzschlüssen. Mögliche Ursachen für Kurzschlüsse können beispielsweise auskragende Geometrien sein, an welchen Feldlinienkonzentrationen auftreten oder Bereiche, in welchen das Elektrolyt so geringe Strömungsgeschwindigkeiten aufweist, dass sich dort Metallionen anreichern und leitfähig werden. An solchen Positionen im Arbeitsspalt treten häufiger Kurzschlüsse auf.

Bislang wird die Form der Arbeitsfläche der Werkzeugkathode oder des zu bearbeitenden Werkstücks heuristisch angepasst. Nach dem "Trial and Error" Prinzip werden dabei solange Versuche gefahren und Änderungen durchgeführt, bis keine Kurzschlüsse mehr entstehen. Dieses Vorgehen ist aufwendig und teuer.

Hiervon ausgehend ist es eine Aufgabe der vorliegenden Erfindung, eine verbesserte Werkzeugkathode vorzuschlagen, welche eine geringere Kurzschlussneigung aufweist. Ferner soll ein Verfahren zum Herstellen einer Werkzeugkathode zur Verfügung gestellt werden. Dies wird erfindungsgemäß durch die Lehre der unabhängigen Ansprüche erreicht. Vorteilhafte Ausführungen der Erfindung sind Gegenstand der Unteransprüche.

Zur Lösung der Aufgabe wird in einem ersten Aspekt der Erfindung eine Werkzeugkathode zum elektrochemischen Bearbeiten eines Bauteils vorgeschlagen, welche wenigstens eine Arbeitsfläche aufweist, die unter Ausbildung eines von einem Elektrolyt durchströmbaren Arbeitsspalts im Wesentlichen komplementär zu der herzustellenden Oberfläche des Bauteils geformt ist. Die Arbeitsfläche der Werkzeugkathode weist dabei wenigstens eine Strömungsführungseinrichtung auf, die so ausgebildet ist, dass diese die Strömungsgeschwindigkeit und / oder die Strömungsrichtung und / oder die Volumenstromverteilung des Elektrolyts im Arbeitsspalt beeinflusst.

Die vorgeschlagene Werkzeugkathode weist wenigstens eine Arbeitsfläche auf, die unter Ausbildung eines von einem Elektrolyt durchströmbaren Arbeitsspalts im Wesentlichen komplementär zu der herzustellenden Oberfläche des Bauteils geformt ist. Dies bedeutet, dass die Werkzeugkathode bzw. die Arbeitsfläche dem Grunde nach ein (Negativ)-Abbild der gewünschten (zu erzeugenden) Werkstücksfläche darstellt, wobei jedoch, u.a. aus strömungsmechanischen Gründen, gewisse Abweichungen bei der Auslegung zu berücksichtigen sind, die dem Fachmann aber z.B. aus der DE102015204798A1 geläufig sind. Der Elektrolyt dient dabei zum Transport der Ladung zwischen der Werkzeugkathode und dem Bauteil, wobei der entstehende Ladungsaustausch Metallionen aus dem Werkstück löst, wodurch sich eine zur Arbeitsfläche der Werkzeugkathode im Wesentlichen komplementäre Oberfläche am Bauteil ausbildet. Die gelösten Metallionen werden mit der Elektrolytströmung aus dem Arbeitsspalt gespült. Die Arbeitsfläche der vorgeschlagenen Werkzeugkathode weist wenigstens eine insbesondere integral mit der Arbeitsfläche ausgebildete Strömungsführungseinrichtung auf, welche die Strömungsgeschwindigkeit und / oder die Strömungsrichtung und / oder Volumenstromverteilung des Elektrolyts im Arbeitsspalt beeinflusst. Vorteilhaft ist die wenigstens ein Strömungsführungseinrichtung ausgebildet, die Strömung des Elektrolyts im Arbeitsspalt zwischen der Werkzeugelektrode und dem Bauteil so zu führen, dass damit Verunreinigungen und/ oder gelöste Metallionen in geeigneter Weise aus dem Arbeitsspalt ausgespült werden.

Insbesondere kann die wenigstens eine Strömungsführungseinrichtung dabei so ausgeführt sein, dass die Elektrolytströmung in strömungstechnisch ungünstiger gelegene Bereiche des Arbeitsspalts geführt und/ oder dort verstärkt wird. Insbesondere kann so die Spülung von weniger durchspülten oder zum Elektrolyteintritt entfernter gelegenen Bereichen des Arbeitsspalts verbessert werden. Die wenigstens eine Strömungsführungseinrichtung kann ein oder mehrteilig ausgeführt sein. Bei zwei oder mehr(-teiligen) Strömungsführungseinrichtungen können die einzelnen Strömungsführungseinrichtungen bzw. Teile der Strömungsführungseinrichtung(en) einander in der Strömungsführung bzw. -umlenkung ergänzend angeordnet sein, insbesondere auch über die Arbeitsfläche der Werkzeugkathode verteilt, um die Strömung des Elektrolyts geeignet auszubilden und um die Strömungsgeschwindigkeit des Elektrolyts an jeder Position im Arbeitsspalt geeignet vorzusehen. Insbesondere kann mithilfe wenigstens einer geeignet ausgebildeten Strömungsführungseinrichtung die Strömungsgeschwindigkeit und / oder die Strömungsrichtung und / oder Volumenstromverteilung des Elektrolyts im Arbeitsspalt gleichmäßiger verteilt werden. Entsprechend lässt sich mithilfe der vorgeschlagenen Gestaltung die Gefahr eines Auftretens von Kurzschlüssen insbesondere zu Beginn der Bearbeitung verringern.

Bei einer Ausführungsform der Werkzeugkathode weist die wenigstens eine Strömungsführungseinrichtung wenigstens eine Leitgeometrie und/ oder wenigstens eine Umlenkgeometrie auf. Dabei dient eine Leitgeometrie insbesondere zum Leiten von Elektrolyt entlang der Strömungsführungseinrichtung. Eine Umlenkgeometrie dient über das Leiten der Strömung hinaus überwiegend zum Umlenken einer Elektrolytströmung insbesondere in einen bestimmten Bereich des Arbeitsspalts. Insbesondere kann mittels einer Umlenkgeometrie eine Elektrolytströmung in einen vergleichsweise gering durchströmten Bereich im Arbeitsspalt gelenkt werden, um diesen ausreichend zu Durchströmen und dort insbesondere Metallionen auszuspülen. Zu diesem Zweck kann die Umlenkgeometrie derart gestaltet sein, dass sie den Strömungswiderstand in einem (ohne Vorhandensein der Umlenkgeometrie) gut durchströmten Bereich des Arbeitsspaltes erhöht und somit eine gleichmäßigere Durchströmung des Arbeitsspaltes bewirkt.

ECM bzw. PECM ist ein abbildendes Verfahren, d.h. die Form der Werkzeugkathode gibt die Form des Werkstückes vor. Gemäß einem Ausführungsbeispiel kann die Leitgeometrie auf der Werkzeugkathode von der gewünschten Form des Werkstücks abweichen, sodass die Leitgeometrie in einem nachfolgenden Fertigungsschritt vom Werkstück entfernt werden muss. In anderen Worten kann eine solche Umlenk- oder Leitgeometrie derart ausgebildet sein, dass sie den Strömungswiderstand an einem gut durchströmten Bereich des Arbeitsspaltes erhöht, um mehr Elektrolyt in einen schlechter durchströmten Bereich des Arbeitsspaltes zu leiten, wobei die Geometrie des Arbeitsspaltes zum Ausbilden der Umlenk- oder Leitgeometrie derart abgeändert wird, dass sie nicht mehr im Wesentlichen komplementär bzw. quasi-negativ zur gewünschten Werkstücksgeometrie ausgebildet ist. Dies hat in einer solchen Ausführungsform zur Folge, dass zum Erreichen der tatsächlich gewünschten Werkstücksgeometrie die Umlenk- oder Leitgeometrie in einem Nachfolgenden Bearbeitungsschritt entfernt bzw. ausgebessert werden muss.

Bei einer bevorzugten Ausführungsform kann die Leitgeometrie an einer Stirnseite der Werkzeugkathode angeordnet sein, d.h. an der in Vorschubrichtung gesehen vorderen Seite der Werkzeugkathode. Hierdurch kann der angestrebte Ausgleich der Strömungsgeschwindigkeiten im Stirnspalt erzielt werden, wo Kurzschlüsse am häufigsten auftreten.

Bei einer Ausführungsform der Werkzeugkathode ist die wenigstens eine Strömungsführungseinrichtung in Form einer Vertiefung und/ oder einer Erhöhung an der Arbeitsfläche ausgebildet. Entsprechend stellt eine Strömungsführungseinrichtung ein Strömungshindernis im Arbeitsspalt dar. Abhängig davon, ob die Strömungsführungseinrichtung als Vertiefung und/ oder Erhöhung ausgebildet ist, wird deren Geometrie an der bearbeiteten Bauteiloberfläche als im Wesentlichen negatives und im Wesentlichen komplementäres Abbild und damit in Form einer Erhöhung oder Vertiefung abgebildet. Sofern die Strömungsführungseinrichtung in Form einer Vertiefung in der Arbeitsfläche ausgebildet ist, kann die hieraus resultierende Erhöhung an der Bauteiloberfläche in einem nachfolgenden Arbeitsschritt ohne zusätzliche Bearbeitung der weiteren Oberfläche von der Bauteiloberfläche entfernt werden.

Bei einer Ausführungsform der Werkzeugkathode ist die wenigstens eine Strömungsführungseinrichtung so ausgebildet, dass durch diese die Strömung des Elektrolyts an vom Elektrolytaustritt weiter entfernten Bereichen im Arbeitsspalt verstärkt wird. Insbesondere in Bereichen des Arbeitsspalts, die weiter entfernt vom Eintrittsort des Elektrolyts bzw. der Elektrolytströmung in den Arbeitsspalt entfernt sind, nimmt die Strömungsgeschwindigkeit und damit die Spülwirkung des Elektrolyts im Arbeitsspalt ab. Ist die Strömungsführungseinrichtung so ausgebildet, dass durch diese die Elektrolytströmung bzw. deren Strömungsgeschwindigkeit in diesen Bereichen verstärkt wird, kann die Gefahr von Kurzschlüssen während der Bearbeitung insbesondere dort verringert werden.

Bei einer Ausführungsform der Werkzeugkathode ist die wenigstens eine Strömungsführungseinrichtung so ausgebildet, dass die Spannweite von der geringsten zur größten Strömungsgeschwindigkeit des Elektrolyts im Arbeitsspalt reduziert wird. Auf diese Weise kann eine gleichmäßigere Strömungsgeschwindigkeit des Elektrolyts durch den Arbeitsspalt vorgesehen werden, wodurch eine geeignete Spülung in insbesondere allen Bereichen des Arbeitsspalts erreichbar ist.

Zur Lösung der Aufgabe wird in einem zweiten Aspekt der Erfindung ein Verfahren zum Herstellen einer Werkzeugkathode zum elektrochemischen Bearbeiten eines Bauteils vorgeschlagen. Die Werkzeugkathode weist wenigstens eine Arbeitsfläche auf, die unter Ausbildung eines von einem Elektrolyt durchströmbaren Arbeitsspalt im Wesentlichen komplementär zu der herzustellenden Oberfläche des Bauteils geformt ist. Bei dem Verfahren zum Herstellen der Werkzeugkathode wird an der Arbeitsfläche wenigstens eine Strömungsführungseinrichtung vorgesehen, welche die Verteilung der Strömungsgeschwindigkeit des Elektrolyts im Arbeitsspalt beeinflusst.

Die Werkzeugkathode zum elektrochemischen Bearbeiten eines Bauteils ist insbesondere gemäß der vorausgehend beschriebenen Werkzeugkathode ausgeführt und weist in wenigstens einer Ausführung die vorausgehend genannten Merkmale und Eigenschaften auf. Insbesondere weist eine derart ausgebildete Werkzeugkathode eine geringere Kurzschlussneigung auf.

Bei einer Ausführungsform des Verfahrens zum Herstellen einer Werkzeugkathode wird die Geometrie der wenigstens einen Strömungsführungseinrichtung iterativ in mehreren aufeinanderfolgenden Schritten entwickelt, um eine geeignete Verteilung der Strömungsgeschwindigkeit an der Arbeitsfläche zu erreichen. Dabei wird die Verteilung der Strömungsgeschwindigkeit im Arbeitsspalt insbesondere nach jedem Entwicklungsschritt, bei dem die Geometrie der Werkzeugkathode angepasst wird, die Ausprägung der Strömung und insbesondere der Strömungsgeschwindigkeit in verschiedenen Bereichen des Arbeitsspalts analysiert. Auf diese Weise kann eine geeignete Ausprägung der Geometrie der Arbeitsfläche und insbesondere der wenigstens einen Strömungsführungseinrichtung bestimmt werden.

Bei einer Ausführungsform des Verfahrens zum Herstellen einer Werkzeugkathode wird zum Festlegen der Geometrie der wenigstens einen Strömungsführungseinrichtung deren Wirkung durch eine Simulationsberechnung der Elektrolytströmung während der Bearbeitung im Arbeitsspalt analysiert. Mittels einer Simulationsrechnung können in vergleichsweise kurzer Zeit verschiedene Varianten von Strömungsführungseinrichtungen hinsichtlich einer geeigneten Beeinflussung der Elektrolytströmung und insbesondere der Verteilung der Strömungsgeschwindigkeit des Elektrolyts im Arbeitsspalt geprüft werden.

Bei einer Ausführungsform des Verfahrens zum Herstellen einer Werkzeugkathode wird die Geometrie der wenigstens einen Strömungsführungseinrichtung ausgehend vom Ergebnis der Simulationsberechnung der Elektrolytströmung im Arbeitsspalt angepasst. Die Verwendung der Ergebnisse der Simulationsberechnung der Elektrolytströmung im Arbeitsspalt ermöglicht es, in vergleichsweise kurzer Zeit eine Werkzeugkathode mit optimiertem Strömungsverhalten zu definieren, ohne dass hierzu mehrere Versuche mit jeweils veränderter Werkzeugkathodengeometrie insbesondere an einer elektrochemischen Bearbeitungsmaschine erforderlich sind.

In einem weiteren Aspekt wird ein Verfahren zum elektrochemischen Bearbeiten eines Bauteils mit wenigstens zwei aufeinander folgend zum Bearbeiten wenigstens einer Bauteiloberfläche eingesetzten Werkzeugkathoden vorgeschlagen, wobei wenigstens eine der Werkzeugkathoden entsprechend einer Ausführungsform der vorausgehend beschriebenen Werkzeugkathode ausgebildet ist. Bei dem vorgeschlagenen Verfahren weist die Arbeitsfläche der zu der nachfolgenden elektrochemischen Bearbeitung der Oberfläche des Bauteils eingesetzten Werkzeugkathode keine Strömungsführungseinrichtung auf.

Bei diesem Verfahren wird die wenigstens eine Bauteiloberfläche aufeinander folgend mit mehreren (wenigstens zwei) Werkzeugkathoden bearbeitet. Dies ist insbesondere bei Bearbeitungen vorgesehen, bei welchen ein größeres Materialvolumen vom Bauteil abgetragen wird und/ oder komplexe Bauteilgeometrien hergestellt werden, welche mit nur einer Werkzeugkathode kaum oder nur schwer in einem einzigen Bearbeitungsschritt herstellbar sind. Die wenigstens eine Werkzeugkathode, welche entsprechend einer Ausführungsform der in der vorausgehenden Offenbarung beschriebenen Werkzeugkathode ausgeführt ist, weist an ihrer Arbeitsfläche wenigstens eine Strömungsführungseinrichtung auf, welche die Strömung und insbesondere die Strömungsgeschwindigkeit des Elektrolyts im Arbeitsspalt beeinflusst. Solche Strömungsführungseinrichtungen können sich insbesondere als im Wesentlichen negative der Strömungsführungseinrichtungen in der bearbeiteten Bauteiloberfläche abzeichnen. Diese in der bearbeiteten Bauteiloberfläche ausgebildeten im Wesentlichen negative weisen üblicherweise auch Strömungsführungseigenschaften auf, welche insbesondere auch bei einem nachfolgenden Schritt die Strömungsgeschwindigkeit des Elektrolyts im Arbeitsspalt beeinflussen und dabei das Risiko des Auftretens von Kurzschlüssen verringern.

Bei einer Ausführungsform dieses Verfahrens zum elektrochemischen Bearbeiten eines Bauteils dient die nachfolgende elektrochemische Bearbeitung zum Fertigstellen der wenigstens einen Oberfläche des Bauteils. Insbesondere werden bei einem solchen nachfolgenden Bearbeitungsschritt noch möglicherweise auf der bearbeiteten Bauteiloberfläche vorhandene "im Wesentlichen negative" von Strömungsführungseinrichtungen entfernt und die gewünschte Oberflächengeometrie und -beschaffenheit am Bauteil hergestellt.

Weitere Merkmale, Vorteile und Anwendungsmöglichkeiten der Erfindung ergeben sich aus der nachfolgenden Beschreibung im Zusammenhang mit den Figuren. Es zeigt
- Fig. 1: eine schematische Darstellung einer beispielhaften Werkzeugkathode des Stands der Technik zum elektrochemischen Bearbeiten eines Bauteils in einer Sicht auf die Arbeitsfläche.
- Fig. 2: eine schematische Darstellung der beispielhaften Werkzeugkathode aus Fig. 1 in einer Anordnung mit einem zu bearbeitenden Bauteil;
- Fig. 3: eine schematische Darstellung des Bauteil und der Werkzeugkathode aus Fig 2 nach dem durchgeführten Bearbeitungsschritt;
- Fig. 4: eine schematische Draufsicht auf das beispielhaft bearbeitete Bauteil, an welchem Bereiche mit verschiedenen Strömungsgeschwindigkeiten des Elektrolyts eingezeichnet sind;
- Fig. 5: eine schematische Ansicht und eine Schnittdarstellung einer beispielhaften erfindungsgemäßen Werkzeugkathode in einer Anordnung mit einem zu bearbeitenden Bauteil;
- Fig. 6: eine schematische Draufsicht auf das beispielhaft bearbeitete Bauteil; und
- Fig. 7: eine schematische Darstellung eines Ablaufdiagramms des erfindungsgemäßen Verfahrens zum Herstellen einer Werkzeugkathode.

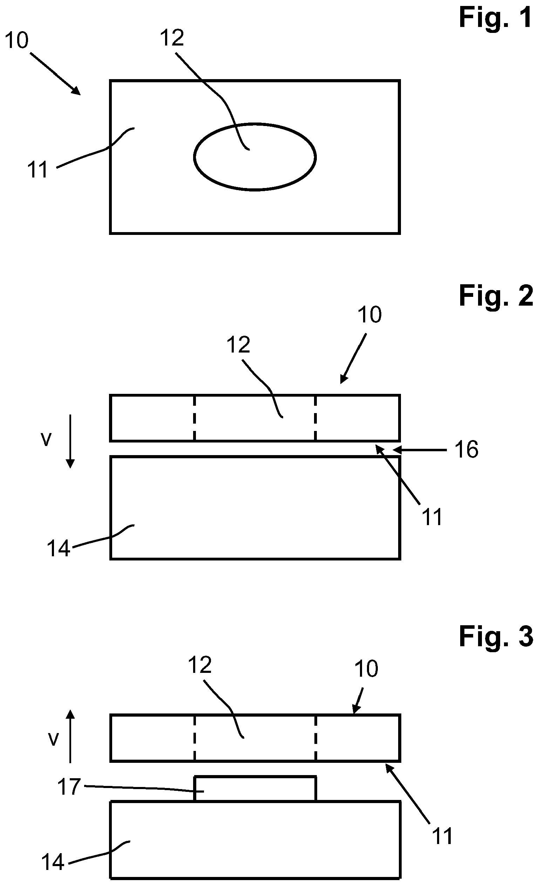

**Fig. 1** zeigt eine schematische Darstellung einer beispielhaften Werkzeugkathode 10 zum elektrochemischen Bearbeiten eines Bauteils in einer Sicht auf die Arbeitsfläche 11, die im Wesentlichen komplementär zu einer herzustellenden Oberfläche eines Bauteils geformt ist. In der Mitte der Arbeitsfläche ist eine Öffnung angeordnet, welche einerseits den Elektrolytaustritt 12 bildet und andererseits eine Bearbeitungsgeometrie der herzustellenden Bauteiloberfläche festlegt.

**Fig. 2** zeigt eine schematische Darstellung der beispielhaften Werkzeugkathode 10 aus Fig. 1 in einer Anordnung mit einem zu bearbeitenden Bauteil 14. Zum elektrochemischen Bearbeiten des Bauteils 14 wird eine Spannung zwischen dem Bauteil 14 und der Werkzeugkathode 10 angelegt sowie durch den Elektrolytaustritt 12 ein Elektrolyt in den zwischen der Werkzeugkathode 10 und dem Bauteil 14 ausgebildeten Arbeitsspalt 16 geführt. Zum Abtragen des Werkstoffs wird die Werkzeugkathode 10 in Richtung des Pfeils v in einer Vorschubgeschwindigkeit in Richtung des Bauteils 14 bewegt und dabei die vorgesehene Bearbeitung durchgeführt.

In **Fig. 3** sind das Bauteil 14 und die Werkzeugkathode 10 nach dem durchgeführten Bearbeitungsschritt dargestellt. Die Werkzeugkathode 10 wird nach der Bearbeitung in Richtung des Pfeils v wieder vom Bauteil 14 weg bewegt. Durch das Abtragen des der Arbeitsfläche 11 gegenüber liegenden Werkstoffs verbleibt am Bauteil 14 ein Vorsprung 17, der bei der beispielhaften Ausführung im Bereich des Elektrolytaustritts 12 angeordnet ist.

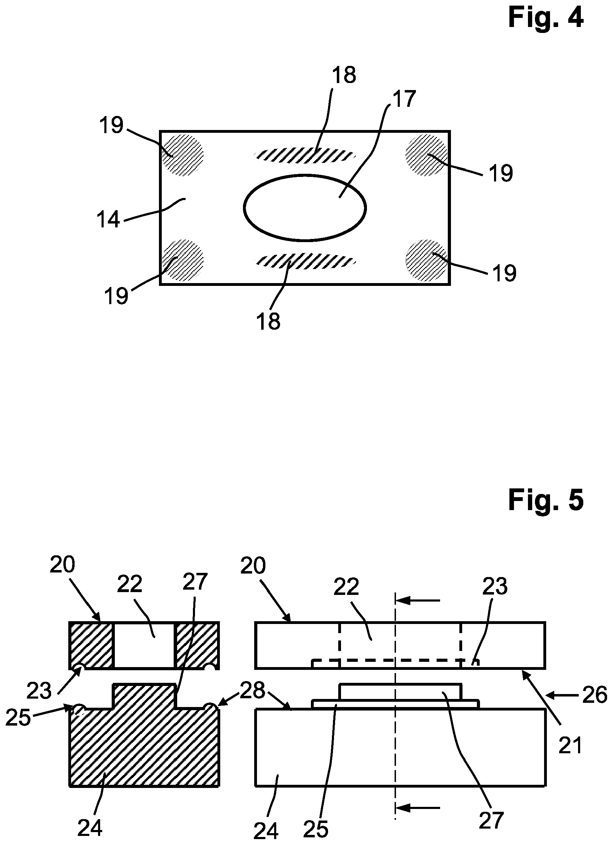

**Fig. 4** zeigt eine schematische Draufsicht auf das beispielhaft bearbeitete Bauteil 24, an welchem Bereiche mit verschiedenen Strömungsgeschwindigkeiten des Elektrolyts eingezeichnet sind. In nahe am Elektrolytaustritt und damit nahe am verbleibenden Vorsprung 17 gelegenen Bereichen 18 ist die Strömungsgeschwindigkeit des Elektrolyts hoch. In solchen Bereichen 18 treten üblicherweise keine Kurzschlüsse auf. Dagegen ist in entfernt vom Elektrolytaustritt und damit entfernt vom verbleibenden Vorsprung 17 gelegenen Bereichen 19 die Strömungsgeschwindigkeit des Elektrolyts niedrig. Insbesondere zu Bearbeitungsbeginn können Kurzschlüsse insbesondere in solchen weniger stark durchströmten Bereichen 19 auftreten.

**Fig. 5** zeigt eine schematische Ansicht und eine Schnittdarstellung einer beispielhaften erfindungsgemäßen Werkzeugkathode 20 in einer Anordnung mit einem zu bearbeitenden Bauteil 24. Die Werkzeugkathode 20 weist zum Bearbeiten des Bauteils 24 eine Arbeitsfläche 21 auf, die unter Ausbildung eines von einem Elektrolyt durchströmbaren Arbeitsspalts 26 im Wesentlichen komplementär zu der herzustellenden Oberfläche 28 des Bauteils 24 geformt ist. Die Arbeitsfläche 21 der beispielhaften erfindungsgemäßen Werkzeugkathode 20 weist eine Strömungsführungseinrichtung 23 auf, die so ausgebildet ist, dass diese die Strömungsgeschwindigkeit des Elektrolyts im Arbeitsspalt 26 beeinflusst.

Die Strömungsführungseinrichtung 23 ist bei der beispielhaften Ausführung in Form einer Vertiefung an der Arbeitsfläche 21 ausgebildet und so angeordnet, dass durch diese die Strömung des Elektrolyts an vom Elektrolytaustritt 22 bzw. den an dieser Position ausgebildeten Vorsprung 27 weiter entfernten Positionen im Arbeitsspalt 26 verstärkt wird.

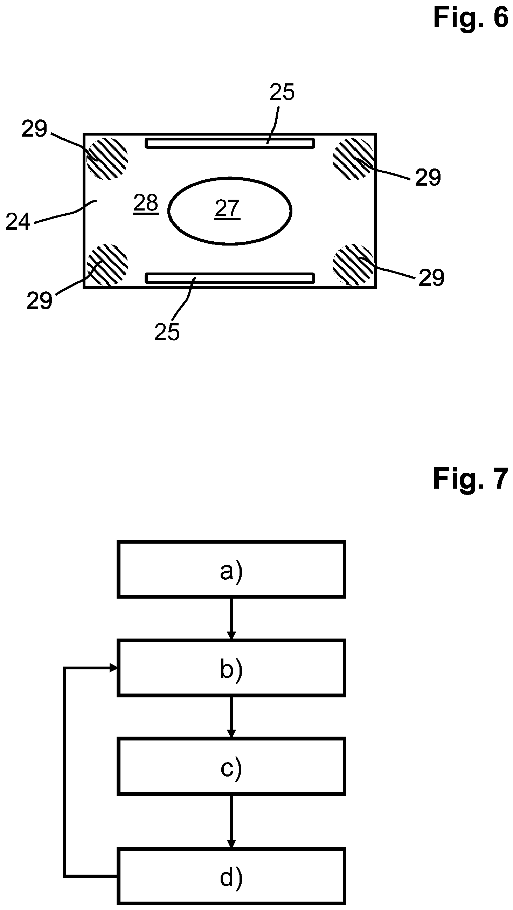

**Fig. 6** zeigt eine schematische Draufsicht auf das beispielhaft bearbeitete Bauteil 24. Durch die an der Werkzeugkathode 20 angeordneten Strömungsführungseinrichtungen 23 bilden sich bei der Bearbeitung an der hergestellten Oberfläche 28 des Bauteils 24 om Wesentlichen negative Strömungsführungseinrichtungen 25 aus, welche insbesondere zusammen mit den Strömungsführungseinrichtungen 23 die Strömung des Elektrolyts beeinflussen. Durch die Strömungsführungseinrichtungen 23, 24 wird während der Bearbeitung ein Teil des vom Elektrolytaustritt 22 ausströmenden Elektrolyts entlang der Strömungsführungseinrichtungen 23, 25 geführt, und damit die Strömungsgeschwindigkeit insbesondere in weiter vom Elektrolytaustritt 22 entfernten Bereichen 29 erhöht. Auf diese Weise kann die Spannweite von der geringsten zur größten Strömungsgeschwindigkeit des Elektrolyts im Arbeitsspalt 26 verringert werden, wodurch auch das Risiko für Kurzschlüsse in den Bereichen 29 insbesondere zu Bearbeitungsbeginn gesenkt werden kann.

**Fig. 7** zeigt eine schematische Darstellung eines Ablaufdiagramms des erfindungsgemäßen Verfahrens zum Herstellen einer Werkzeugkathode 20 zum elektrochemischen Bearbeiten eines Bauteils 24, welche wenigstens eine Arbeitsfläche 21 aufweist, die unter Ausbildung eines von einem Elektrolyt durchströmbaren Arbeitsspalts 26 im Wesentlcihen komplementär zu der herzustellenden Oberfläche des Bauteils 24 geformt ist.

Das erfindungsgemäße Verfahren weist die folgenden Schritte auf: In einem ersten Schritt a) erfolgt das Erstellen eines Modells der Werkzeugkathode 20. Im zweiten Schritt b) wird eine Strömungssimulation des Modells der Werkzeugkathode 20 durchgeführt. In einem dritten Schritt c) wird geprüft, ob die geänderte Geometrie der Werkzeugkathode 20 eine gleichmäßigere Verteilung der Strömungsgeschwindigkeit des Elektrolyts im Arbeitsspalt 26 erreicht. Im Schritt d) erfolgt ein Anpassen der Geometrie des Modells der Werkzeugkathode 20. Die Schritte b) bis d) werden so lange wiederholt, bis eine ausreichend gleichmäßige Verteilung der Strömungsgeschwindigkeit des Elektrolyts im Arbeitsspalt 26 erreicht ist.

### BEZUGSZEICHENLISTE

- 10: Werkzeugkathode
- 11: Arbeitsfläche
- 12: Elektrolytaustritt
- 14: Bauteil
- 16: Arbeitsspalt
- 17: Vorsprung
- 18: nahe am Elektrolytaustritt gelegener Bereich
- 19: entfernt vom Elektrolytaustritt gelegener Bereich
- 20: Werkzeugkathode
- 21: Arbeitsfläche
- 22: Elektrolytaustritt
- 23: Strömungsführungseinrichtung
- 24: Bauteil
- 25: Strömungsführungseinrichtung
- 26: Arbeitsspalt
- 27: Vorsprung
- 28: Bauteiloberfläche
- 29: vom Elektrolytaustritt entfernter Bereich

- v: Pfeil

## Patentansprüche

1. Werkzeugkathode (10, 20) zum elektrochemischen Bearbeiten eines Bauteils (14, 24), welche wenigstens eine Arbeitsfläche (11, 21) aufweist, die unter Ausbildung eines von einem Elektrolyt durchströmbaren Arbeitsspalts (16, 26) im Wesentlichen komplementär zu der herzustellenden Oberfläche (28) des Bauteils (14, 24) geformt ist, **dadurch gekennzeichnet, dass** die Arbeitsfläche (21) wenigstens eine Strömungsführungseinrichtung (23) aufweist, die so ausgebildet ist, dass diese die Strömungsgeschwindigkeit, die Strömungsrichtung und / oder die Volumenstromverteilung des Elektrolyts im Arbeitsspalt (21) beeinflusst.

2. Werkzeugkathode nach Anspruch 1, **dadurch gekennzeichnet, dass** die wenigstens eine Strömungsführungseinrichtung (23) wenigstens eine Leitgeometrie und/ oder wenigstens eine Umlenkgeometrie aufweist.

3. Werkzeugkathode nach einem der vorhergehenden Ansprüche, **dadurch gekennzeichnet, dass** die wenigstens eine Strömungsführungseinrichtung (23) in Form einer Vertiefung und/ oder einer Erhöhung an der Arbeitsfläche (21) ausgebildet ist.

4. Werkzeugkathode nach einem der vorhergehenden Ansprüche, **dadurch gekennzeichnet, dass** die wenigstens eine Strömungsführungseinrichtung (23) so ausgebildet ist, dass durch diese die Strömung des Elektrolyts an vom Elektrolytaustritt (22) weiter entfernten Bereichen (29) im Arbeitsspalt (26) verstärkt wird.

5. Werkzeugkathode nach einem der vorhergehenden Ansprüche, **dadurch gekennzeichnet, dass** die wenigstens eine Strömungsführungseinrichtung (23) so ausgebildet ist, dass die Spannweite von der geringsten zur größten Strömungsgeschwindigkeit des Elektrolyts im Arbeitsspalt (26) verringert wird.

6. Verfahren zum Herstellen einer Werkzeugkathode (10, 20) mit wenigstens einer Arbeitsfläche (11, 21), die unter Ausbildung eines von einem Elektrolyt durchströmbaren Arbeitsspalts (16, 26) im Wesentlichen komplementär zu der herzustellenden Oberfläche (28) des Bauteils (14, 24) geformt ist, **dadurch gekennzeichnet, dass** an der Arbeitsfläche (11, 21) wenigstens eine Strömungsführungseinrichtung (23) vorgesehen wird, welche die Verteilung der Strömungsgeschwindigkeit des Elektrolyts im Arbeitsspalt (16, 26) beeinflusst.

7. Verfahren zum Herstellen einer Werkzeugkathode gemäß Anspruch 6 **dadurch gekennzeichnet, dass** die Geometrie der wenigstens einen Strömungsführungseinrichtung (23) iterativ in mehreren aufeinanderfolgenden Schritten entwickelt wird, um eine geeignete Verteilung der Strömungsgeschwindigkeit an der Arbeitsfläche (21) zu erreichen.

8. Verfahren zum Herstellen einer Werkzeugkathode gemäß wenigstens einem der Ansprüche 6 oder 7 **dadurch gekennzeichnet, dass** zum Festlegen der Geometrie der wenigstens einen Strömungsführungseinrichtung (23) deren Wirkung durch eine Simulationsberechnung der Elektrolytströmung während der Bearbeitung im Arbeitsspalt (26) analysiert wird.

9. Verfahren zum Herstellen einer Werkzeugkathode gemäß Anspruch 8, **dadurch gekennzeichnet, dass** die Geometrie der wenigstens einen Strömungsführungseinrichtung (23) ausgehend vom Ergebnis der Simulationsberechnung der Elektrolytströmung im Arbeitsspalt (26) angepasst wird.

10. Verfahren zum elektrochemischen Bearbeiten eines Bauteils (14, 24) mit wenigstens zwei aufeinander folgend zum Bearbeiten wenigstens einer Bauteiloberfläche (28) eingesetzten Werkzeugkathoden (10, 20), von welchen wenigstens eine gemäß wenigstens einem der vorhergehenden Ansprüche ausgebildet ist, **dadurch gekennzeichnet, dass** die Arbeitsfläche (11) der zu einer nachfolgenden elektrochemischen Bearbeitung der Oberfläche des Bauteils (24) eingesetzte Werkzeugkathode (10) keine Strömungsführungseinrichtung (23) aufweist.

11. Verfahren zum elektrochemischen Bearbeiten eines Bauteils gemäß Anspruch 9, **dadurch gekennzeichnet, dass** die nachfolgende elektrochemische Bearbeitung zum Fertigstellen der wenigstens einen Oberfläche des Bauteils (24) dient.
